(19) Europäisches Patentamt / European Patent Office / Office européen des brevets

(11) **EP 4 498 618 A1**

(12) **EUROPEAN PATENT APPLICATION**
published in accordance with Art. 153(4) EPC

(43) Date of publication:
**29.01.2025 Bulletin 2025/05**

(21) Application number: **23773911.5**

(22) Date of filing: **22.03.2023**

(51) International Patent Classification (IPC):
***H04B 17/309*** (2015.01)

(52) Cooperative Patent Classification (CPC):
**H04B 7/06; H04B 7/08; H04B 17/309; H04W 24/10**

(86) International application number:
**PCT/CN2023/083069**

(87) International publication number:
**WO 2023/179664 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022 CN 202210289777**

(71) Applicant: **VIVO MOBILE COMMUNICATION CO., LTD.**
**Dongguan, Guangdong 523863 (CN)**

(72) Inventors:
• **YANG, Ang**
  **Dongguan, Guangdong 523863 (CN)**
• **SUN, Peng**
  **Dongguan, Guangdong 523863 (CN)**
• **SUN, Bule**
  **Dongguan, Guangdong 523863 (CN)**

(74) Representative: **Conti, Marco**
**Bugnion S.p.A.**
**Via di Corticella, 87**
**40128 Bologna (IT)**

(54) **CHANNEL INFORMATION TRANSMISSION METHOD AND APPARATUS, AND COMMUNICATION DEVICE**

(57) This application discloses a channel information transmission method and apparatus, and a communication device, and pertains to the field of communication technology. The channel information transmission method according to an embodiment of this application includes: in a case that a first signal is received, determining, by a first communication device, channel information of a first channel based on the first signal; and sending, by the first communication device, the channel information of the first channel to a second communication device; where the first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

200

In a case that a first signal is received, a first communication device determines channel information of a first channel based on the first signal — S210

The first communication device sends the channel information of the first channel to a second communication device — S220

FIG. 2

EP 4 498 618 A1

**Description**

**CROSS-REFERENCE TO RELATED APPLICATIONS**

This invention claims priority to Chinese Patent Application No. 202210289777.9, filed with the China Patent Office on March 23, 2022 and titled "CHANNEL INFORMATION TRANSMISSION METHOD AND APPARATUS, AND COMMUNICATION DEVICE", which is incorporated herein by reference in its entirety.

**TECHNICAL FIELD**

This application belongs to the field of communication technology, and specifically relates to a channel information transmission method and apparatus, and a communication device.

**BACKGROUND**

In related communication technology, a communication system can use full bandwidth mode to transmit a demodulation reference signal (Demodulation Reference Signal, DMRS), a physical uplink shared channel (Physical Uplink Shared Channel, PUSCH), a physical downlink shared channel (Physical downlink shared channel, PDSCH), and the like, where the DMRS can be used to demodulate data corresponding to the PUSCH, the PDSCH, and the like.

However, in the aforementioned transmission process, how to obtain channel information is still an urgent problem to be solved in this field.

**SUMMARY**

An embodiment of this application provides a channel information transmission method and apparatus, and a communication device, so as to obtain channel information during transmission of a DMRS, a PUSCH, a PDSCH, or the like.

According to a first aspect, a channel information transmission method is provided, including: in a case that a first signal is received, determining, by a first communication device, channel information of a first channel based on the first signal; and sending, by the first communication device, the channel information of the first channel to a second communication device; where the first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

According to a second aspect, a channel information transmission method is provided, including: receiving, by a second communication device, channel information of a first channel from a first communication device, where the channel information of the first channel is determined by the first communication device based on a received first signal; where the first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

According to a third aspect, a channel information transmission apparatus is provided, applied to a first communication device, where the apparatus includes: a processing module configured to: in a case that a first signal is received, determine channel information of a first channel based on the first signal; and a sending module configured to send the channel information of the first channel to a second communication device; where the first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

According to a fourth aspect, a channel information transmission apparatus is provided, including: a receiving module configured to receive channel information of a first channel from a first communication device, where the channel information of the first channel is determined by the first communication device based on a received first signal; where the first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

According to a fifth aspect, a communication device is provided, where the communication device includes a processor and a memory, where the memory stores a program or instructions capable of running on the processor, and when the program or instructions are executed by the processor, the steps of the method according to the first aspect or the second aspect are implemented.

According to a sixth aspect, a communication device is provided, including a processor and a communication interface, where the communication interface is coupled to the processor, and the processor is configured to run a program or instructions to implement the steps of the method according to the first aspect, or to implement the steps of the method according to the second aspect.

According to a seventh aspect, a channel information transmission system is provided, including: a first communication device and a second communication device, where the first communication device may be used to execute the steps of the method according to the first aspect, and the second communication device may be used to execute the steps of the method according to the second aspect.

According to an eighth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a ninth aspect, a chip is provided, where the chip includes a processor and a communication interface, the communication interface is coupled to the processor, and the processor is configured to run a program or instructions to implement the method according to the first aspect or the method according to the second aspect.

According to a tenth aspect, a computer program product/program product is provided, where the computer program/program product is stored in a storage medium, and the computer program/program product is executed by at least one processor to implement the steps of the method according to the first aspect or the steps of the method according to the second aspect.

In the embodiments of this application, in a case that the first signal is received, the first communication device determines the channel information of the first channel based on the first signal, and reports the channel information of the first channel, so that the second communication device can obtain the channel information corresponding to the first communication device, thereby enabling the communication system to obtain comprehensive channel information.

## BRIEF DESCRIPTION OF DRAWINGS

FIG. 1 is a schematic structural diagram of a wireless communication system according to an example embodiment of this application;

FIG. 2 is a flowchart of a channel information transmission method according to an example embodiment of this application.

FIG. 3 is a flowchart of a channel information transmission method according to another example embodiment of this application.

FIG. 4 is a flowchart of a channel information transmission method according to still another example embodiment of this application.

FIG. 5 is a flowchart of a channel information transmission method according to yet another example embodiment of this application.

FIG. 6 is a schematic structural diagram of a channel information transmission apparatus according to an example embodiment of this application.

FIG. 7 is a schematic structural diagram of a channel information transmission apparatus according to another example embodiment of this application.

FIG. 8 is a schematic structural diagram of a communication device according to an example embodiment of this application.

FIG. 9 is a schematic structural diagram of a network-side device according to an example embodiment of this application.

FIG. 10 is a schematic structural diagram of a terminal according to an example embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustration purpose, and NR terms are used in most of the following descriptions, although these technologies may also be applied to other applications than an NR system application, for example, the 6th generation (6th Generation, 6G) communication system.

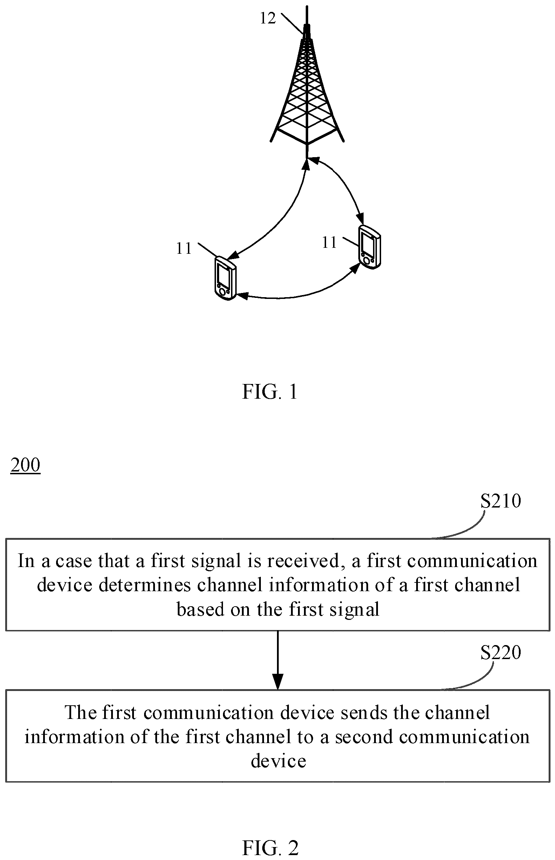

FIG. 1 is a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (home devices with wireless communication functions, such as refrigerators, televisions, washing machines, or furniture), a game console, a personal computer (personal computer, PC), a teller machine, or a self-service machine. The wearable device includes a smartwatch, a smart band, smart earphones, smart glasses, smart jewelry (a smart bracelet, a smart hand chain, a smart ring, a smart necklace, a smart leglet, a smart anklet, and the like), a smart wristband, smart clothing, or the like. It should be noted that the terminal 11 is not limited to a specific type in the embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or other suitable terms in the field. Provided that the same technical effect is achieved, the base station is not limited to specific technical terms. It should be noted that in the embodiments of this application, only the base station in the NR system is used as an example, but the specific type of the base station is not limited.

The following details the technical solutions provided in the embodiments of this application by using some embodiments and application scenarios with reference to the accompanying drawings.

FIG. 2 is a flowchart of a channel information transmission method 200 according to an example embodiment of this application. The method 200 may be executed by, without limitation to, a first communication device, such as a terminal or a network-side device, and specifically, may be executed by hardware and/or software installed in the first communication device. In this embodiment, the method 200 may at least include the following steps.

S210. In a case that a first signal is received, the first communication device determines channel information of a first channel based on the first signal.

The first signal may include at least one of a DMRS, a PUSCH, a PDSCH, a physical downlink control channel (Physical downlink control channel, PDCCH), and a physical uplink control channel (Physical Uplink Control Channel, PUCCH).

In one implementation, the DMRS may be transmitted alone, or the DMRS may be transmitted together with at least one of a PDSCH, a PDCCH, a PUCCH, and a PUSCH for demodulating data corresponding to the PDSCH, PDCCH, PUCCH, or PUSCH.

In this case, it can be understood that the first channel is a channel that the first signal goes through. Assuming that the first signal is sent by a third communication device, the channel information of the first channel may include information of a channel from at least one antenna port of the third communication device to at least one antenna port of the first communication device. In this embodiment, the channel information of the first channel is affected by a transmit beamforming (beamforming) matrix or vector of the third communication device, and/or the channel information of the first channel is affected by a receive beamforming matrix or vector of the first communication device.

That the channel information of the first channel is affected by the transmit beamforming matrix or vector can be understood as follows: the channel information of the first channel is channel information indicating that the first signal is affected by the transmit beamforming matrix or vector of the third communication device. Correspondingly, that the channel information of the first channel is affected by the receive beamforming matrix or vector can be understood as follows: the channel information of the first channel is channel information indicating that the first signal is affected by the receive beamforming matrix or vector of the first communication device.

For example, assuming that the third communication device is a base station, the first communication device is a user equipment (User Equipment, UE), and the first signal is a DMRS and a PDSCH, then the base station sends the DMRS and PDSCH (for example, the DMRS and PDSCH are sent together, but they occupy different time-frequency resources, resource elements (Resource element, RE), or Doppler delay domain resources), and the UE receives the DMRS and PDSCH. In this case, the DMRS and PDSCH are affected by digital beamforming of the base station.

It is assumed that: the base station sends data or reference signals (Reference Signal, RS) of L layers (Layer), that is, DMRS and PDSCH, the base station has Nt transmit antennas, and the UE has Nr receive antennas. Then the formula for signal transceiving on a single RE is shown in formula (1).

$$\mathbf{Y}_1 = \mathbf{W}_2\mathbf{H}\mathbf{W}_1 s + \mathbf{n} \text{ or } \mathbf{Y}_2 = \mathbf{H}\mathbf{W}_1 s + \mathbf{n}$$

In formula (1), s is a constellation symbol of a DMRS sequence or data sent by the base station, with a dimension of L*1. HH is a complete channel matrix from all antenna ports of the base station to all antenna ports of the UE, with a dimension of Nr*Nt. $\mathbf{Y}_1$ or $\mathbf{Y}_2$ is a signal received by the UE, $\mathbf{Y}_1$ is a UE-received signal that has undergone receive beamforming (with a dimension of L*1), and $\mathbf{Y}_2$ is a UE-received signal that has not undergone beamforming (with a dimension of Nr*1). $\mathbf{W}_1$ is a transmit beamforming matrix/vector of the base station (with a dimension of Nt*L), and $\mathbf{W}_2$ is a receive beamforming matrix/vector of the UE (with a dimension of L*Nr). Based on this, the channel information of the first channel refers to $\mathbf{W}_2\mathbf{H}\mathbf{W}_1$ or $\mathbf{H}\mathbf{W}_1$.

For the DMRS, its constellation symbol s is known to both the base station and the UE, so the UE can divide $\mathbf{Y}_1$ or $\mathbf{Y}_2$ by the constellation symbol s obtained by correct decoding (or the least square method, or other signal estimation methods) to obtain the channel information of the first channel.

For the PDSCH, the constellation symbol s of its data is known to the base station (since it is sent by the base station) but unknown to the UE. However, the UE can obtain signal estimation of the PDSCH through the DMRS, and then obtain the constellation symbol s of the data corresponding to the PDSCH through operations such as equalization, demodulation, and decoding (if the UE successfully decodes the data information, it can deduce the constellation symbol of the data corresponding to the PDSCH).

It should be noted that for scenarios where the first signal is a signal other than the DMRS and the PDSCH, and/or where the third communication device is a communication device other than the base station and the first communication device is a communication device other than the UE, the process for determining the channel information of the first channel is similar to the foregoing process, and is not described herein to avoid repetition.

S220. The first communication device sends the channel information of the first channel to a second communication device.

The second communication device may be a communication device that sends the first signal, such as the third communication device described above; or may be a communication device other than the first communication device and the third communication device, which is not limited herein. In addition, the second communication device may be a terminal or a network-side device, which is not limited herein.

Additionally, after obtaining the channel information of the first channel, the second communication device can adjust a channel estimation algorithm based on the channel information of the first channel and an artificial intelligence (Artificial Intelligence, AI) model, so that the estimation algorithm used for estimation of the first channel is more accurate, thereby improving capacity of the communication system during subsequent signal transmission.

In this embodiment, in a case that the first signal is received, the first communication device determines the channel information of the first channel based on the first signal, and reports the channel information of the first channel, so that the second communication device can obtain the channel information corresponding to the first communication device, enabling the communication system to obtain comprehensive channel information, and helping the AI model to train and adjust the channel estimation algorithm, thereby improving the capacity of the communication system.

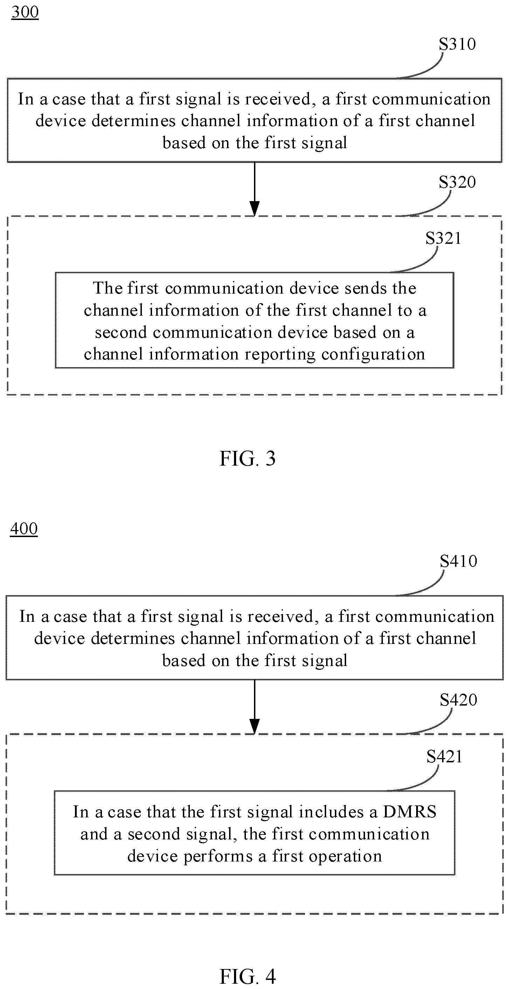

FIG. 3 is a flowchart of a channel information transmission method 300 according to an example embodiment of this application. The method 300 may be executed by, without limitation to, a first communication device, such as a terminal or a network-side device, and specifically, may be executed by hardware and/or software installed in the first communication device. In this embodiment, the method 300 may at least include the following steps.

S310. In a case that a first signal is received, the first communication device determines channel information of a first channel based on the first signal.

The first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

It can be understood that for the implementation process of S310, reference may be made to the related description in the method embodiment 200. Besides, in a possible implementation, the process for determining, by a first communication device, channel information of a first channel based on the first signal may further include: in a case that a first condition is met, determining the channel information of the first channel based on the first signal, where the first condition includes any one of the following conditions (11) to (13).

(11) The first signal is a single-layer (Layer) signal; in other words, when the first signal is a single-layer signal, the first communication device performs measurement and/or channel information reporting of the first signal.

(12) The first signal is multi-layer, but channel information corresponding to the multi-layer first signal is independently obtainable. In other words, in a case that the first signal is multi-layer and channel information of the multiple layers can be obtained separately, the first communication device measures and/or reports the channel information.

In this embodiment, a coding method such as Alamouti coding can be used between multiple layers. In addition, on the measurement resource for reporting the channel information of the first channel, the first communication device can use a special coding method between multiple layers by default, such as Alamouti coding method.

(13) The first signal is multi-layer, but channel information corresponding to the multi-layer first signal is separable.

In other words, in a case that the first signal is multi-layer and the channel information of the multiple layers is separable, the first communication device measures and/or reports the channel information.

In this embodiment, a coding method such as Alamouti coding can be used between multiple layers. In addition, on the measurement resource for reporting the channel information of the first channel, the first communication device can use a special coding method between multiple layers by default, such as Alamouti coding method.

S320. The first communication device sends the channel information of the first channel to a second communication device.

It can be understood that for the implementation process of S320, reference may be made to the related description in the method embodiment 200. Besides, in a possible implementation, the implementation process of S320 may include S321 shown in FIG. 3.

S321. The first communication device sends the channel information of the first channel to the second communication device based on a channel information reporting configuration.

The channel information reporting configuration may be implemented through protocol agreement, higher-layer configuration, network-side configuration, or the like, which is not limited herein. In this embodiment, the channel information reporting configuration may be associated with the first signal. For example, the channel information reporting configuration at least includes an identity (Identity, ID) and/or a resource of the first signal.

It can be understood that the resource of the first signal may be a transmission resource for transmitting the first signal, a measurement resource for measuring the first signal, or a reporting resource for reporting the channel information of the first channel, which is not limited herein.

Based on this, in an implementation, the step of sending, by the first communication device, the channel information of the first channel to the second communication device based on a channel information reporting configuration includes at least one of (21) to (23).

(21) In a case that the channel information reporting configuration indicates a target resource and the first signal exists in a first resource of the target resource, the first communication device reports the channel information on the first resource to the second communication device.

The target resource at least includes a measurement resource and a reporting resource, the measurement resource is used by the first communication device to measure the first signal, and the reporting resource is used to report channel information of the first channel measured by the first communication device based on the measurement resource.

For example, assuming that the target resource includes specific time-domain resources and frequency-domain resources and the first signal exists in all or some of the resources (that is, the first resource) within these time-domain resources and frequency-domain resources, then the first communication device reports the channel information on the resources where the first signal exists. For example, the target resource is 50 resource blocks (Resource Block, RB) in frequency domain, with a cycle of 100 milliseconds (millisecond, ms). Within each cycle, it is measured whether the first signal exists from the 20th ms to the 30th ms. If yes, the channel information on the corresponding resource is reported; otherwise, the channel information on the corresponding resource is not reported.

(22) In a case that the channel information reporting configuration indicates a target resource but the first signal does not exist in the target resource, the first communication device does not expect to report the channel information of the first channel to the second communication device.

Similar to (21), the target resource at least includes a measurement resource and a reporting resource, the measurement resource is used by the first communication device to measure the first signal, and the reporting resource is used to report channel information of the first channel measured by the first communication device based on the measurement resource.

Additionally, it can be understood that "not expect" can also be understood as cancel, not execute, stop, ignore, or the like, which is not limited herein.

(23) In a case that the channel information reporting configuration does not indicate a target resource (or does not clearly indicate a target resource) but the first signal exists in a second resource of the target resource, the first communication device reports the channel information on the second resource to the second communication device.

Similar to (21), the target resource at least includes a measurement resource and a reporting resource, the measurement resource is used by the first communication device to measure the first signal, and the reporting resource is used to report channel information of the first channel measured by the first communication device based on the measurement resource.

It should be noted that for (21) to (23), if the first signal exists or appears on a specific resource (such as the first resource or the second resource), the first communication device needs to perform measurement.

Certainly, for the reporting of the channel information, in a possible implementation, the first communication device may report channel information on a third resource to the second communication device, where the third resource belongs to the first resource, and the second communication device has successfully decoded the first signal on the third resource. In other words, the first communication device reports the channel information on the resource corresponding to the successfully decoded first signal, and does not report the channel information on the resource corresponding to the unsuccessfully decoded first signal.

For example, if the target resource is 50 RBs in frequency domain within a 100 ms time period, among these resources, if the first signal appears within the 20th ms to the 30th ms, but only the first signal (such as the PDSCH) on some RBs within the 21st ms to the 27th ms can be successfully decoded, then channel information corresponding to the successfully decoded first signal within the 21st ms to the 27th ms is reported.

Optionally, during reporting, the channel information is reported only when the first signal (such as the PDSCH, PDCCH, PUCCH, or PUSCH) appearing on all frequency domain resources and/or time domain resources and/or Doppler domain resources and/or delay domain resources in the target resource is successfully decoded.

Further, in an implementation, the channel information of the first channel may further include association information between the channel information of the first channel and an antenna port of the second communication device, such as a correspondence between information in the channel information of the first channel and at least one antenna port of the second communication device. For example, the channel information of the first channel indicates which channel information belongs to which antenna port of the third communication device. For another example, if the third communication device has N antenna ports, the first communication device divides the channel information of the first channel to be reported into N blocks, where content of an i-th block belongs to an i-th antenna port of the third communication device.

It should be noted that the association information between the channel information of the first channel and the antenna port of the second communication device may be configured by the network-side device, indicated by the terminal, agreed upon in a protocol by default, or the like, which is not limited herein.

FIG. 4 is a flowchart of a channel information transmission method 400 according to an example embodiment of this application. The method 400 may be executed by, without limitation to, a first communication device, such as a terminal or a network-side device, and specifically, may be executed by hardware and/or software installed in the first communication device. In this embodiment, the method 400 may at least include the following steps.

S410. In a case that a first signal is received, the first communication device determines channel information of a first channel based on the first signal.

The first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

It can be understood that for the implementation process of S420, reference may be made to the related description in the method embodiments 200 and 300. To avoid repetition, details are not described herein again.

S420. The first communication device sends the channel information of the first channel to a second communication device.

It can be understood that for the implementation process of S420, reference may be made to the related description in the method embodiments 200 and 300. Besides, in a possible implementation, the implementation process of S320 may include S421 shown in FIG. 4.

S421. In a case that the first signal includes a DMRS and a second signal, the first communication device performs a first operation.

The second signal includes at least one of a PUSCH, a PUCCH, a PDSCH, and a PDCCH. The first operation includes at least one of the following operation 1, operation 2, and operation 3.

Operation 1: Skip performing power and/or amplitude processing on channel information corresponding to the DMRS and the second signal, but mark positions of the DMRS and the second signal.

Optionally, the position includes at least one of a Doppler delay domain position, a time-frequency resource position, and a resource element RE position. In this embodiment, marking can be performed explicitly or implicitly, which is not limited herein.

Optionally, the explicit marking method may include indicating a resource ID of the DMRS, and/or indicating a resource ID of the second signal, or indicating a type of the DMRS (such as type 1, type 2, or whether an additional DMRS is included).

Optionally, the implicit marking method may include a pattern (pattern) type or ID of the DMRS (the protocol defines several types of DMRS patterns in advance, with each pattern corresponding to one pattern ID).

Operation 2: Skip performing power and/or amplitude processing on channel information corresponding to the DMRS and the second signal, and skip marking positions of the DMRS and the second signal.

Operation 3: Perform power and/or amplitude processing on channel information corresponding to the DMRS and the second signal, but skip marking positions of the DMRS and the second signal.

It should be noted that since the DMRS and the second signal (such as a PUSCH, a PUCCH, a PDSCH, or a PDCCH) generally have different transmit powers, the purpose of performing power processing on the DMRS and the second signal in the above operations 1 to 3 is to make their powers equal or normalize their powers, thereby improving accuracy of channel information reporting and ensuring reliability of the communication system.

Marking the positions of the DMRS and the second signal enables the second communication device to clearly know the channel information corresponding to the DMRS and the second signal, thereby improving the reliability of the communication system.

Further, in an implementation, before sending the channel information of the first channel to the second communication device, the first communication device may further remove interference information existing in the channel information of the first channel; and in a case that the interference information is less than or not greater than a first threshold, the first communication device sends the channel information of the first channel to the second communication device, thereby improving reliability of information transmission.

Optionally, the interference information may include at least one of inter-user interference, inter-cell interference, inter-subcarrier interference, inter-delay interference, and inter-Doppler interference.

Additionally, the first communication device may also determine, based on a signal-to-noise ratio of the channel information, whether to report the information of the first channel. For example, in a case that the signal-to-noise ratio of the channel information of the first channel is greater than or not less than a second threshold, the first communication device sends the channel information of the first channel to the second communication device. For another example, in a case that the signal-to-noise ratio of the channel information of the first channel is less than or not greater than a third threshold, the first communication device sends the channel information of the first channel to the second communication device. For another example, in a case that the signal-to-noise ratio of the channel information of the first channel is greater than or not less than the second threshold and not greater than the third threshold, the first communication device sends the channel information of the first channel to the second communication device, to ensure reliability of information reporting.

It can be understood that the first threshold, second threshold, and third threshold mentioned in this embodiment can be implemented by protocol agreement, higher-layer configuration, or network-side configuration. Certainly, if the first threshold, second threshold, and third threshold are determined by the first communication device, the first communication device can report the first threshold, second threshold, and third threshold to the second communication device, thereby ensuring the consistent understanding of the first threshold, second threshold, and third threshold between the first communication device and the second communication device.

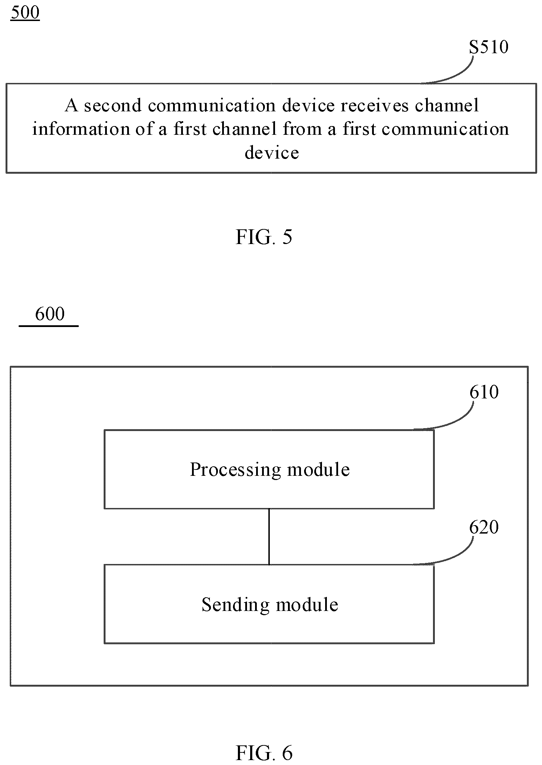

FIG. 5 is a flowchart of a channel information transmission method 500 according to an example embodiment of this application. The method 500 may be executed by, without limitation to, a second communication device, such as a terminal or a network-side device, and specifically, may be executed by hardware and/or software installed in the second communication device. In this embodiment, the method may at least include the following steps.

S510. The second communication device receives channel information of a first channel from a first communication device, where the channel information of the first channel is determined by the first communication device based on a received first signal.

The first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

Optionally, the first signal includes at least one of the following: a demodulation reference signal DMRS; a physical uplink shared channel PUSCH; a physical downlink shared channel PDSCH; a physical downlink control channel PDCCH; and a physical uplink control channel PUCCH.

It can be understood that the channel information transmission method provided in the method embodiment 500 has the same or corresponding technical features as the channel information transmission methods provided in the method embodiments 200 to 400. Therefore, for the implementation process of the channel information transmission method provided in the method embodiment 500, reference may be made to the related description of the channel information transmission methods provided in the method embodiments 200 to 400. To avoid repetition, details are not described herein again.

The channel information transmission methods 200 to 500 provided in the embodiments of this application may be executed by a channel information transmission apparatus. In the embodiments of this application, the channel information transmission apparatus performing the channel information transmission methods 200 to 500 is used as an example to describe a channel information transmission apparatus according to an embodiment of this application.

FIG. 6 is a schematic structural diagram of a channel information transmission apparatus 600 according to an example embodiment of this application. The apparatus 600 is applied to a first communication device. The apparatus 600 includes: a processing module 610 configured to, in a case that a first signal is received, determine channel information of a first channel based on the first signal; and a sending module 620 configured to send the channel information of the first channel to a second communication device; where the first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

Optionally, the first signal includes at least one of the following: a demodulation reference signal DMRS; a physical uplink shared channel PUSCH; a physical downlink shared channel PDSCH; a physical downlink control channel PDCCH; and a physical uplink control channel PUCCH.

Optionally, the step of sending, by the sending module 620, the channel information of the first channel to a second communication device includes: sending the channel information of the first channel to the second communication device based on a channel information reporting configuration; where the channel information reporting configuration is associated with the first signal.

Optionally, that the channel information reporting configuration is associated with the first signal includes: the channel information reporting configuration at least includes an identity and/or resource of the first signal.

Optionally, the step of sending, by the sending module 620, the channel information of the first channel to the second communication device based on a channel information reporting configuration includes at least one of the following: in a case that the channel information reporting configuration indicates a target resource and the first signal exists in a first resource of the target resource, reporting channel information on the first resource to the second communication device; in a case that the channel information reporting configuration indicates a target resource but the first signal does not exist in the target resource, skipping expecting to report the channel information of the first channel to the second communication device; and in a case that the channel information reporting configuration does not indicate a target resource but the first signal exists in a second resource of the target resource, reporting channel information on the second resource to the second communication device; where the target resource at least includes a measurement resource and a reporting resource, the measurement resource is used by the first communication device to measure the first signal, and the reporting resource is used to report channel information of the first channel measured by the first communication device based on the measurement resource.

Optionally, the step of reporting, by the sending module 620, channel information on the first resource to the second communication device includes: reporting, for the first communication device, channel information on a third resource to the second communication device, where the third resource belongs to the first resource, and the second communication device has successfully decoded the first signal on the third resource.

Optionally, the channel information of the first channel further includes association information between the channel information of the first channel and an antenna port of the second communication device.

Optionally, the association information between the channel information of the first channel and the antenna port of the second communication device includes: a correspondence between information in the channel information of the first channel and at least one antenna port of the second communication device.

Optionally, the step of sending, by the sending module 620, the channel information of the first channel to a second communication device includes: in a case that the first signal includes a DMRS and a second signal, performing at least one of the following: skipping performing power and/or amplitude processing on channel information corresponding to the DMRS and the second signal, but marking positions of the DMRS and the second signal; skipping performing power and/or amplitude processing on channel information corresponding to the DMRS and the second signal, and skipping marking positions of the DMRS and the second signal; and performing power and/or amplitude processing on channel information corresponding to the DMRS and the second signal, but skipping marking positions of the DMRS and the second signal; where the second signal includes at least one of a PUSCH, a PUCCH, a PDSCH, and a PDCCH.

Optionally, the position includes at least one of a Doppler delay domain position, a time-frequency resource position, and a resource element RE position.

Optionally, the step of determining, by the processing module 610, channel information of a first channel based on the first signal includes: in a case that a first condition is met, determining the channel information of the first channel based on the first signal, where the first condition includes any one of the following: the first signal is a single-layer signal; the first signal is multi-layer, but channel information corresponding to the multi-layer first signal is independently obtainable; and the first signal is multi-layer, but channel information corresponding to the multi-layer first signal is separable.

Optionally, the processing module 610 is further configured to remove interference information existing in the channel information of the first channel; and in a case that the interference information is less than or not greater than a first threshold, the sending module 620 performs the step of sending the channel information of the first channel to a second communication device.

Optionally, the interference information includes at least one of the following: inter-user interference; inter-cell interference; inter-subcarrier interference; inter-delay interference; and inter-Doppler interference.

Optionally, the sending module 620 is further configured to perform at least one of the following: in a case that a signal-to-noise ratio of the channel information of the first channel is greater than or not less than a second threshold, sending the channel information of the first channel to the second communication device; and in a case that a signal-to-noise ratio of the channel information of the first channel is less than or not greater than a third threshold, sending the channel information of the first channel to the second communication device.

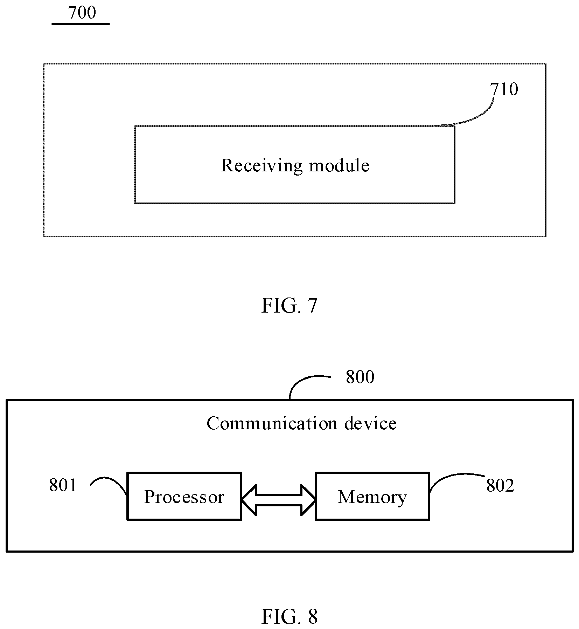

FIG. 7 is a schematic structural diagram of a channel information transmission apparatus 700 according to an example embodiment of this application. The apparatus 700 includes: a receiving module 710 configured to receive channel information of a first channel from a first communication device, where the channel information of the first channel is determined by the first communication device based on a received first signal; where the first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

Optionally, the first signal includes at least one of the following: a demodulation reference signal DMRS; a physical uplink shared channel PUSCH; a physical downlink shared channel PDSCH; a physical downlink control channel PDCCH; and a physical uplink control channel PUCCH.

The channel information transmission apparatus 600 or 700 in the embodiments of this application may be a communication device, such as a terminal or a network-side device; or may be a component in a communication device, such as an integrated circuit or a chip. For example, the terminal may include but is not limited to the types of the terminal 11 listed above, and the network-side device may include but is not limited to the types of the network-side device 12 listed above, which are not specifically limited in the embodiments of this application.

The channel information transmission apparatus provided in the embodiment of this application can implement various processes of the method embodiments shown in FIG. 2 to FIG. 5, with the same technical effects achieved. To avoid repetition, details are not described herein again.

Optionally, as shown in FIG. 8, an embodiment of this application further provides a communication device 800 including a processor 801 and a memory 802, where the memory 802 stores a program or instructions capable of running on the processor 801. For example, in a case that the communication device 800 is a terminal, when the program or instructions are executed by the processor 801, the steps of the method embodiments 200 to 500 are implemented, with the same technical effects achieved. In a case that the communication device 800 is a network-side device, when the program or instructions are executed by the processor 801, the steps of the method embodiments 200 to 500 are implemented, with the same technical effects achieved. To avoid repetition, details are not described herein again.

In an implementation, the communication device 800 may be a network-side device, and the network-side device may include a processor and a communication interface, where the communication interface is coupled to the processor, and the processor is configured to run a program or instructions to implement the steps of the methods described in the method embodiments 200 to 500. The implementation processes and methods described in the above method embodiments can be applied to this network-side device embodiment, with the same technical effects achieved.

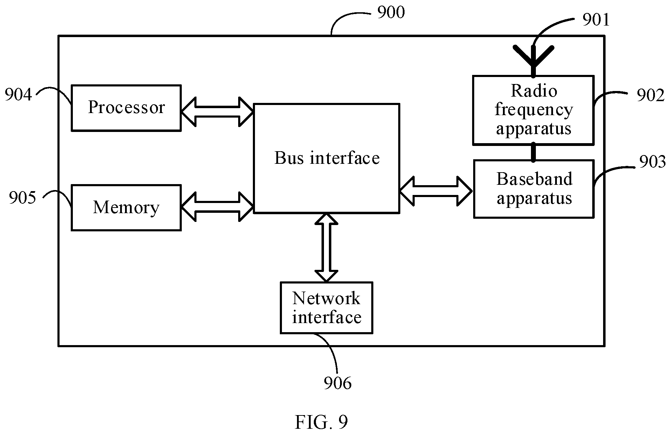

Optionally, as shown in FIG. 9, the network-side device 900 includes: an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information via the antenna 901, and sends the received information to the baseband apparatus 903 for processing. In a downlink direction, the baseband apparatus 903 processes to-be-sent information, and sends the information to the radio frequency apparatus 902; and the radio frequency apparatus 902 processes the received information and then sends the information out via the antenna 901.

The methods executed by the network-side device in the above embodiments can be implemented in the baseband apparatus 903, and the baseband apparatus 903 includes a baseband processor.

The baseband apparatus 903 may include, for example, at least one baseband processing unit, where a plurality of chips are disposed on the baseband processing unit. As shown in FIG. 9, one of the chips is, for example, the baseband processor, and connected to the memory 905 via a bus interface, to invoke the program in the memory 905 to perform the operations of the network device shown in the foregoing method embodiments.

The network-side device may further include a network interface 906. The interface is, for example, a common public radio interface (common public radio interface, CPRI).

Specifically, the network-side device 900 in this embodiment of the present invention further includes: instructions or a program stored in the memory 905 and capable of running on the processor 904. The processor 904 invokes the instructions or program in the memory 905 to execute the method executed by the modules shown in FIG. 6 or FIG. 7, with the same technical effects achieved. To avoid repetition, details are not described herein again.

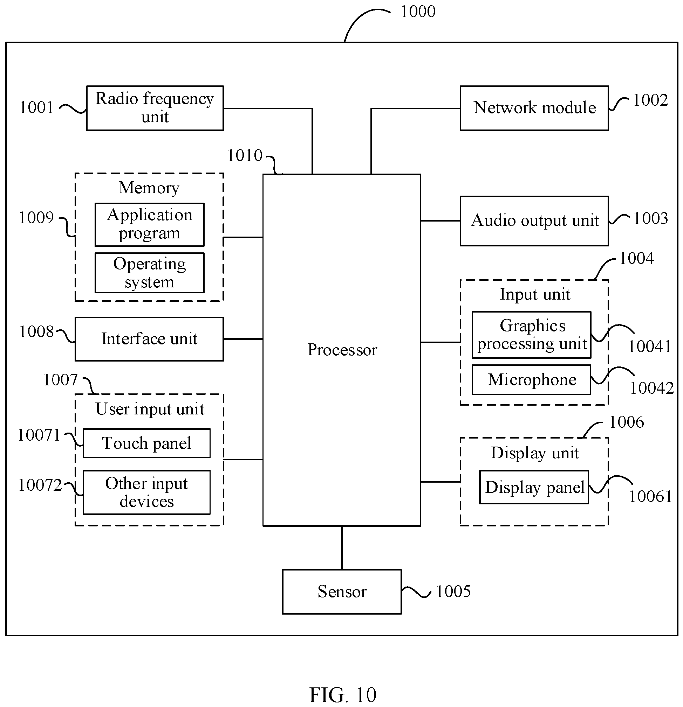

In another implementation, the communication device 800 may be a terminal. The terminal includes a processor and a communication interface, where the communication interface is coupled to the processor, and the processor is configured to run a program or instructions to implement the steps of the methods described in the method embodiments 200 to 500. This terminal embodiment corresponds to the method embodiments on the terminal side, and the implementation processes and methods described in the above method embodiments can be applied to this terminal embodiment, with the same technical effects achieved. Specifically, FIG. 10 is a schematic diagram of a hardware structure of a terminal implementing an embodiment of this application.

The terminal 1000 includes but is not limited to at least some of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system, so as to implement functions such as charging management, discharging management, and power consumption management by using the power management system. The structure of the terminal shown in FIG. 10 does not constitute any limitation on the terminal. The terminal may include more or fewer components than shown in the figure, or a combination of some components, or the components disposed differently. Details are not described herein again.

It should be understood that in the embodiment of this application, the input unit 1004 may include a graphics processing unit (graphics processing unit, GPU) 10041 and a microphone 10042. The graphics processing unit 10041 processes image data of a static picture or a video that is obtained by an image capture apparatus (for example, a camera) in an image capture mode or a video capture mode. The display unit 1006 may include a display panel 10061. The display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or an on/off key), a trackball, a mouse, and a joystick. Details are not described herein.

In the embodiment of this application, after receiving downlink data from the network-side device, the radio frequency unit 1001 can transmit the downlink data to the processor 1010 for processing. In addition, the radio frequency unit 1001 can send uplink data to the network-side device. Typically, the radio frequency unit 1001 includes but is not limited to an antenna, an amplifier, a transceiver, a coupler, a low noise amplifier, and a duplexer.

The memory 1009 may be configured to store a software program or instructions and various data. The memory 1009 may mainly include a first storage area for storing programs or instructions and a second storage area for storing data. The first storage area may store an operating system, an application program or instructions required by at least one function (for example, a sound play function or an image play function), and the like. Additionally, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 1009 in the embodiment of this application includes but is not limited to these and any other suitable types of memory.

The processor 1010 may include one or more processing units. Optionally, the processor 1010 integrates an application processor and a modem processor. The application processor primarily processes operations involving an operating system, a user interface, an application program, or the like. The modem processor primarily processes radio communication signals, for example, being a baseband processor. It can be understood that the modem processor may alternatively be not integrated into the processor 1010.

The processor 1010 is configured to: in a case that a first signal is received, determine channel information of a first channel based on the first signal; and the radio frequency unit 1001 is configured to send the channel information of the first channel to a second communication device; where the first channel is a channel that the first signal goes through, the channel information of the first channel includes information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

Optionally, the first signal includes at least one of the following: a demodulation reference signal DMRS; a physical uplink shared channel PUSCH; a physical downlink shared channel PDSCH; a physical downlink control channel PDCCH; and a physical uplink control channel PUCCH.

Optionally, the step of sending, by the radio frequency unit 1001, the channel information of the first channel to a second communication device includes: sending the channel information of the first channel to the second communication device based on a channel information reporting configuration; where the channel information reporting configuration is associated with the first signal.

Optionally, that the channel information reporting configuration is associated with the first signal includes: the channel information reporting configuration at least includes an identity and/or resource of the first signal.

Optionally, the step of sending, by the radio frequency unit 1001, the channel information of the first channel to the second communication device based on a channel information reporting configuration includes at least one of the following: in a case that the channel information reporting configuration indicates a target resource and the first signal exists in a first resource of the target resource, reporting channel information on the first resource to the second communication device; in a case that the channel information reporting configuration indicates a target resource but the first signal does not exist in the target resource, skipping expecting to report the channel information of the first channel to the second communication device; and in a case that the channel information reporting configuration does not indicate a target resource but the first signal exists in a second resource of the target resource, reporting channel information on the second resource to the second communication device; where the target resource at least includes a measurement resource and a reporting resource, the measurement resource is used by the first communication device to measure the first signal, and the reporting resource is used to report channel information of the first channel measured by the first communication device based on the measurement resource.

Optionally, the step of reporting, by the radio frequency unit 1001, channel information on the first resource to the second communication device includes: reporting, for the first communication device, channel information on a third resource to the second communication device, where the third resource belongs to the first resource, and the second communication device has successfully decoded the first signal on the third resource.

Optionally, the channel information of the first channel further includes association information between the channel information of the first channel and an antenna port of the second communication device.

Optionally, the association information between the channel information of the first channel and the antenna port of the second communication device includes: a correspondence between information in the channel information of the first channel and at least one antenna port of the second communication device.

Optionally, the step of sending, by the radio frequency unit 1001, the channel information of the first channel to a second communication device includes: in a case that the first signal includes a DMRS and a second signal, performing at least one of the following: skipping performing power and/or amplitude processing on channel information corresponding to the DMRS and the second signal, but marking positions of the DMRS and the second signal; skipping performing power and/or amplitude processing on channel information corresponding to the DMRS and the second signal, and skipping marking positions of the DMRS and the second signal; and performing power and/or amplitude processing on channel information corresponding to the DMRS and the second signal, but skipping marking positions of the DMRS and the second signal; where the second signal includes at least one of a PUSCH, a PUCCH, a PDSCH, and a PDCCH.

Optionally, the position includes at least one of a Doppler delay domain position, a time-frequency resource position, and a resource element RE position.

Optionally, the step of determining, by the processor 110, channel information of a first channel based on the first signal includes: in a case that a first condition is met, determining the channel information of the first channel based on the first signal, where the first condition includes any one of the following: the first signal is a single-layer signal; the first signal is multi-layer, but channel information corresponding to the multi-layer first signal is independently obtainable; and the first signal is multi-layer, but channel information corresponding to the multi-layer first signal is separable.

Optionally, the processor 110 is further configured to remove interference information existing in the channel information of the first channel; and in a case that the interference information is less than or not greater than a first threshold, the radio frequency unit 1001 performs the step of sending the channel information of the first channel to a second communication device.

Optionally, the interference information includes at least one of the following: inter-user interference; inter-cell interference; inter-subcarrier interference; inter-delay interference; and inter-Doppler interference.

Optionally, the radio frequency unit 1001 is further configured to perform at least one of the following: in a case that a signal-to-noise ratio of the channel information of the first channel is greater than or not less than a second threshold, sending the channel information of the first channel to the second communication device; and in a case that a signal-to-noise ratio of the channel information of the first channel is less than or not greater than a third threshold, sending the channel information of the first channel to the second communication device.

In this embodiment, in a case that the first signal is received, the first communication device determines the channel information of the first channel based on the first signal, and reports the channel information of the first channel, so that the second communication device can obtain the channel information corresponding to the first communication device, enabling the communication system to obtain comprehensive channel information, and helping the AI model to train and adjust the channel estimation algorithm, thereby improving the capacity of the communication system.

An embodiment of this application further provides a readable storage medium, where a program or instructions are stored in the readable storage medium. When the program or the instructions are executed by a processor, the processes of the foregoing channel information transmission method embodiments can be implemented, with the same technical effects achieved. To avoid repetition, details are not described herein again.

The processor is a processor in the terminal described in the foregoing embodiment. The readable storage medium includes a computer-readable storage medium, such as a computer read-only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions of a network-side device to implement the processes of the foregoing channel information transmission method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the computer program product includes a processor, a memory, and a program or instructions stored in the memory and capable of running on the processor. When the program or instructions are executed by the processor, the processes of the foregoing channel information transmission method embodiments can be implemented, with the same technical effects achieved. To avoid repetition, details are not described herein again.

An embodiment of this application further provides a channel information transmission system including: a first communication device and a second communication device. The first communication device may be configured to perform the steps of the methods described in the method embodiments 200 to 400, and the second communication device may be configured to perform the steps of the method described in the method embodiment 500.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing embodiments, persons skilled in the art can clearly understand that the method in the foregoing embodiments may be implemented by software in addition to a necessary universal hardware platform or by hardware only. In most cases, the former is a preferred implementation. Based on such an understanding, the technical solutions of this application essentially, or the part contributing to the prior art may be implemented in a form of a computer software product. The computer software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to these specific embodiments. The specific embodiments are merely illustrative rather than restrictive. Inspired by this application, persons of ordinary skill in the art may develop many other forms without departing from the principle of this application and the protection scope of the claims, and all such forms fall within the protection scope of this application.

**Claims**

1. A channel information transmission method, comprising:

   in a case that a first signal is received, determining, by a first communication device, channel information of a first channel based on the first signal; and
   sending, by the first communication device, the channel information of the first channel to a second communication device; wherein
   the first channel is a channel that the first signal goes through; and
   the channel information of the first channel comprises information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

2. The method according to claim 1, wherein the first signal comprises at least one of the following:

   a demodulation reference signal DMRS;
   a physical uplink shared channel PUSCH;
   a physical downlink shared channel PDSCH;
   a physical downlink control channel PDCCH; and
   a physical uplink control channel PUCCH.

3. The method according to claim 1, wherein the step of sending, by the first communication device, the channel information of the first channel to a second communication device comprises:

   sending, by the first communication device, the channel information of the first channel to the second communication device based on a channel information reporting configuration; wherein the channel information reporting configuration is associated with the first signal.

4. The method according to claim 3, wherein that the channel information reporting configuration is associated with the first signal comprises:
   the channel information reporting configuration at least comprises an identity and/or a resource of the first signal.

5. The method according to claim 4, wherein the step of sending, by the first communication device, the channel information of the first channel to the second communication device based on a channel information reporting configuration comprises at least one of the following:

   in a case that the channel information reporting configuration indicates a target resource and the first signal exists in a first resource of the target resource, reporting, by the first communication device, channel information on the first resource to the second communication device;
   in a case that the channel information reporting configuration indicates a target resource but the first signal does not exist in the target resource, skipping expecting, by the first communication device, to report the channel information of the first channel to the second communication device; and
   in a case that the channel information reporting configuration does not indicate a target resource but the first signal exists in a second resource of the target resource, reporting, by the first communication device, channel information on the second resource to the second communication device; wherein

the target resource at least comprises a measurement resource and a reporting resource, the measurement resource is used by the first communication device to measure the first signal, and the reporting resource is used to report channel information of the first channel measured by the first communication device based on the measurement resource.

6. The method according to claim 5, wherein the step of reporting, by the first communication device, channel information on the first resource to the second communication device comprises:
reporting, by the first communication device, channel information on a third resource to the second communication device, wherein the third resource belongs to the first resource, and the second communication device has successfully decoded the first signal on the third resource.

7. The method according to any one of claims 1 to 6, wherein the channel information of the first channel further comprises association information between the channel information of the first channel and an antenna port of the second communication device.

8. The method according to claim 7, wherein the association information between the channel information of the first channel and the antenna port of the second communication device comprises:
a correspondence between information in the channel information of the first channel and at least one antenna port of the second communication device.

9. The method according to any one of claims 1 to 8, wherein the step of sending, by the first communication device, the channel information of the first channel to a second communication device comprises:
in a case that the first signal comprises a DMRS and a second signal, performing, by the first communication device, at least one of the following:

skipping performing power and/or amplitude processing on channel information corresponding to the DMRS and the second signal, but marking positions of the DMRS and the second signal;
skipping performing power and/or amplitude processing on channel information corresponding to the DMRS and the second signal, and skipping marking positions of the DMRS and the second signal; and

performing power and/or amplitude processing on channel information corresponding to the DMRS and the second signal, but skipping marking positions of the DMRS and the second signal; wherein
the second signal comprises at least one of a PUSCH, a PUCCH, a PDSCH, and a PDCCH.

10. The method according to claim 9, wherein the position comprises at least one of a Doppler delay domain position, a time-frequency resource position, and a resource element RE position.

11. The method according to any one of claims 1 to 10, wherein the step of determining channel information of a first channel based on the first signal comprises:
in a case that a first condition is met, determining the channel information of the first channel based on the first signal, wherein the first condition comprises any one of the following:

the first signal is a single-layer signal;
the first signal is multi-layer, but channel information corresponding to the multi-layer first signal is independently obtainable; and
the first signal is multi-layer, but channel information corresponding to the multi-layer first signal is separable.

12. The method according to any one of claims 1 to 11, wherein the step of sending, by the first communication device, the channel information of the first channel to a second communication device comprises:

removing, by the first communication device, interference information existing in the channel information of the first channel; and
in a case that the interference information is less than or not greater than a first threshold, sending, by the first communication device, the channel information of the first channel to the second communication device.

13. The method according to claim 12, wherein the interference information comprises at least one of the following:

inter-user interference;
inter-cell interference;
inter-subcarrier interference;
inter-delay interference; and
inter-Doppler interference.

14. The method according to any one of claims 1 to 13, wherein the step of sending, by the first communication device, the channel information of the first channel to a second communication device comprises at least one of the following:

in a case that a signal-to-noise ratio of the channel information of the first channel is greater than or not less than a second threshold, sending, by the first communication device, the channel information of the first channel to the second communication device; and

in a case that a signal-to-noise ratio of the channel information of the first channel is less than or not greater than a third threshold, sending, by the first communication device, the channel information of the first channel to the second communication device.

15. A channel information transmission method, comprising:

receiving, by a second communication device, channel information of a first channel from a first communication device, wherein the channel information of the first channel is determined by the first communication device based on a received first signal; wherein

the first channel is a channel that the first signal goes through; and

the channel information of the first channel comprises information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

16. The method according to claim 15, wherein the first signal comprises at least one of the following:

a demodulation reference signal DMRS;
a physical uplink shared channel PUSCH;
a physical downlink shared channel PDSCH;
a physical downlink control channel PDCCH; and
a physical uplink control channel PUCCH.

17. A channel information transmission apparatus, applied to a first communication device, wherein the apparatus comprises:

a processing module configured to: in a case that a first signal is received, determine channel information of a first channel based on the first signal; and

a sending module configured to send the channel information of the first channel to a second communication device; wherein

the first channel is a channel that the first signal goes through, the channel information of the first channel comprises information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

18. The apparatus according to claim 17, wherein the first signal comprises at least one of the following:

a demodulation reference signal DMRS;
a physical uplink shared channel PUSCH;
a physical downlink shared channel PDSCH;
a physical downlink control channel PDCCH; and
a physical uplink control channel PUCCH.

19. The apparatus according to claim 18, wherein the step of sending, by the sending module, the channel information of the first channel to a second communication device comprises:

sending the channel information of the first channel to the second communication device based on a channel information reporting configuration; wherein

the channel information reporting configuration is associated with the first signal.

20. The apparatus according to claim 19, wherein that the channel information reporting configuration is associated with the first signal comprises:

the channel information reporting configuration at least comprises an identity and/or a resource of the first signal.

21. The apparatus according to claim 20, wherein the step of sending, by the sending module, the channel information of the first channel to the second communication device based on a channel information reporting configuration comprises at least one of the following:

in a case that the channel information reporting configuration indicates a target resource and the first signal exists in a first resource of the target resource, reporting channel information on the first resource to the second communication device;

in a case that the channel information reporting configuration indicates a target resource but the first signal does not exist in the target resource, skipping expecting to report the channel information of the first channel to the second communication device; and

in a case that the channel information reporting configuration does not indicate a target resource but the first signal exists in a second resource of the target resource, reporting channel information on the second resource to the second communication device; wherein

the target resource at least comprises a measurement resource and a reporting resource, the measurement resource is used by the first communication device to measure the first signal, and the reporting resource is used to report channel information of the first channel measured by the first communication device based on the measurement resource.

22. The apparatus according to claim 21, wherein the step of reporting, by the sending module, channel information on the first resource to the second communication device comprises:

reporting, by the first communication device, channel information on a third resource to the second communication device, wherein the third resource belongs to the first resource, and the second communication device has successfully decoded the first signal on the third resource.

23. The apparatus according to any one of claims 17 to 22, wherein the channel information of the first channel further comprises association information between the channel information of the first channel and an antenna port of the second communication device.

24. The apparatus according to claim 23, wherein the association information between the channel information of the first channel and the antenna port of the second communication device comprises:

a correspondence between information in the channel information of the first channel and at least one antenna port of the second communication device.

25. The apparatus according to any one of claims 17 to 24, wherein the step of sending, by the sending module, the channel information of the first channel to a second communication device comprises:

in a case that the first signal comprises a DMRS and a second signal, performing at least one of the following:

skipping performing power and/or amplitude processing on channel information corresponding to the DMRS and the second signal, but marking positions of the DMRS and the second signal;

skipping performing power and/or amplitude processing on channel information corresponding to the DMRS and the second signal, and skipping marking positions of the DMRS and the second signal; and

performing power and/or amplitude processing on channel information corresponding to the DMRS and the second signal, but skipping marking positions of the DMRS and the second signal; wherein

the second signal comprises at least one of a PUSCH, a PUCCH, a PDSCH, and a PDCCH.

26. The apparatus according to claim 25, wherein the position comprises at least one of a Doppler delay domain position, a time-frequency resource position, and a resource element RE position.

27. The apparatus according to any one of claims 17 to 26, wherein the step of determining, by the processing module, channel information of a first channel based on the first signal comprises:

in a case that a first condition is met, determining the channel information of the first channel based on the first signal, wherein the first condition comprises any one of the following:

the first signal is a single-layer signal;

the first signal is multi-layer, but channel information corresponding to the multi-layer first signal is independently obtainable; and

the first signal is multi-layer, but channel information corresponding to the multi-layer first signal is separable.

28. The apparatus according to any one of claims 17 to 27, wherein the processing module is further configured to remove interference information existing in the channel information of the first channel; and

in a case that the interference information is less than or not greater than a first threshold, the sending module performs the step of sending the channel information of the first channel to a second communication device.

29. The apparatus according to claim 28, wherein the interference information comprises at least one of the following:

inter-user interference;
inter-cell interference;
inter-subcarrier interference;
inter-delay interference; and
inter-Doppler interference.

30. The apparatus according to any one of claims 17 to 29, wherein the sending module is further configured to perform at least one of the following:

in a case that a signal-to-noise ratio of the channel information of the first channel is greater than or not less than a second threshold, sending the channel information of the first channel to the second communication device; and
in a case that a signal-to-noise ratio of the channel information of the first channel is less than or not greater than a third threshold, sending the channel information of the first channel to the second communication device.

31. A channel information transmission apparatus, comprising:

a receiving module configured to receive channel information of a first channel from a first communication device, wherein the channel information of the first channel is determined by the first communication device based on a received first signal; wherein
the first channel is a channel that the first signal goes through, the channel information of the first channel comprises information of a channel from at least one antenna port of a third communication device to at least one antenna port of the first communication device, the channel information of the first channel is affected by a transmit beamforming matrix or vector of the third communication device, and/or the channel information of the first channel is affected by a receive beamforming matrix or vector of the first communication device, the third communication device being a device that sends the first signal.

32. The apparatus according to claim 31, wherein the first signal comprises at least one of the following:

a demodulation reference signal DMRS;
a physical uplink shared channel PUSCH;
a physical downlink shared channel PDSCH;
a physical downlink control channel PDCCH; and
a physical uplink control channel PUCCH.

33. A communication device, comprising a processor and a memory, wherein the memory stores a program or instructions capable of running on the processor, and when the program or instructions are executed by the processor, the steps of the channel information transmission method according to any one of claims 1 to 14 are implemented, or the steps of the channel information transmission method according to either claim 15 or 16 are implemented.

34. A readable storage medium, wherein the readable storage medium stores a program or instructions, and when the program or instructions are executed by a processor, the steps of the channel information transmission method according to any one of claims 1 to 14 are implemented, or the steps of the channel information transmission method according to either claim 15 or 16 are implemented.

FIG. 1

200

S210

In a case that a first signal is received, a first communication device determines channel information of a first channel based on the first signal

S220

The first communication device sends the channel information of the first channel to a second communication device

FIG. 2

300

S310

In a case that a first signal is received, a first communication device determines channel information of a first channel based on the first signal

S320

S321

The first communication device sends the channel information of the first channel to a second communication device based on a channel information reporting configuration

FIG. 3

400

S410

In a case that a first signal is received, a first communication device determines channel information of a first channel based on the first signal

S420

S421

In a case that the first signal includes a DMRS and a second signal, the first communication device performs a first operation

FIG. 4

500

S510

| A second communication device receives channel information of a first channel from a first communication device |
| :---: |

FIG. 5

600

| Processing module | 610 |
| :---: | :---: |
| Sending module | 620 |

FIG. 6

700

Receiving module 710

FIG. 7

800

Communication device

801 Processor ⟺ Memory 802

FIG. 8

FIG. 9

1000

Radio frequency unit — 1001

Network module — 1002

Memory — 1009
Application program
Operating system

1010

Audio output unit — 1003

1004
Input unit
Graphics processing unit — 10041
Microphone — 10042

Interface unit — 1008

Processor

User input unit — 1007
Touch panel — 10071
Other input devices — 10072

1006
Display unit
Display panel — 10061

Sensor — 1005

FIG. 10

## INTERNATIONAL SEARCH REPORT

| International application No. |
|---|
| **PCT/CN2023/083069** |

**A. CLASSIFICATION OF SUBJECT MATTER**

H04B 17/309(2015.01)i

According to International Patent Classification (IPC) or to both national classification and IPC

**B. FIELDS SEARCHED**

Minimum documentation searched (classification system followed by classification symbols)

IPC: H04B,H04L,H04W

Documentation searched other than minimum documentation to the extent that such documents are included in the fields searched

Electronic data base consulted during the international search (name of data base and, where practicable, search terms used)

CNTXT, ENTXT, WPABS, CNKI, 3GPP, CJFD: 波束, 波束成型, 波束成形, 波束赋型, 波束赋形, 报告, 传输, 传送, 发送, 反馈, 信道信息, 资源, 天线, 端口, 矩阵, beam forming, report+, transmit+, send, feedback, channel information, CSI, resource, antenna, port, matrix, DMRS, PUSCH, PDSCH, PUCCH, PDCCH

**C. DOCUMENTS CONSIDERED TO BE RELEVANT**

| Category* | Citation of document, with indication, where appropriate, of the relevant passages | Relevant to claim No. |
|---|---|---|
| X | US 2020153543 A1 (QUALCOMM INC.) 14 May 2020 (2020-05-14) description, paragraphs 6-14 and 41-107 | 1-34 |
| X | CN 108282210 A (HUAWEI TECHNOLOGIES CO., LTD.) 13 July 2018 (2018-07-13) description, paragraphs 78-193 | 1-34 |
| X | CN 112821995 A (DATANG MOBILE COMMUNICATIONS EQUIPMENT CO., LTD.) 18 May 2021 (2021-05-18) description, paragraphs 35-151 | 1-34 |
| X | WO 2022032627 A1 (QUALCOMM INC.) 17 February 2022 (2022-02-17) description, paragraphs 105-234 | 1-34 |
| A | CN 110546911 A (LG ELECTRONICS INC.) 06 December 2019 (2019-12-06) entire document | 1-34 |
| A | WO 2020059146 A1 (NTT DOCOMO, INC.) 26 March 2020 (2020-03-26) entire document | 1-34 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 April 2023** | **24 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083069**

| Patent document cited in search report | | | Publication date (day/month/year) | Patent family member(s) | | | Publication date (day/month/year) |
|---|---|---|---|---|---|---|---|
| US | 2020153543 | A1 | 14 May 2020 | EP | 3878126 | A1 | 15 September 2021 |
| | | | | US | 11159270 | B2 | 26 October 2021 |
| | | | | WO | 2020096795 | A1 | 14 May 2020 |
| CN | 108282210 | A | 13 July 2018 | | None | | |
| CN | 112821995 | A | 18 May 2021 | | None | | |
| WO | 2022032627 | A1 | 17 February 2022 | WO | 2022033572 | A1 | 17 February 2022 |
| CN | 110546911 | A | 06 December 2019 | WO | 2019027151 | A1 | 07 February 2019 |
| | | | | JP | 2020516208 | A | 28 May 2020 |
| | | | | JP | 7060672 | B2 | 26 April 2022 |
| | | | | US | 2020178287 | A1 | 04 June 2020 |
| | | | | US | 11153900 | B2 | 19 October 2021 |
| | | | | EP | 3506545 | A1 | 03 July 2019 |
| | | | | EP | 3506545 | A4 | 18 March 2020 |
| | | | | KR | 101978852 | B1 | 16 May 2019 |
| WO | 2020059146 | A1 | 26 March 2020 | JPWO | 2020059146 | A1 | 24 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210289777